# EUROPÄISCHE PATENTANMELDUNG

(11) **EP 3 534 514 A1**
(43) Veröffentlichungstag der Anmeldung: **04.09.2019**
(21) Anmeldenummer: 18159784.0
(22) Anmeldetag: 02.03.2018
(51) Int. Cl.: H02K 15/06

(54) **SPULENWICKLUNG FÜR EINEN STATOR EINER ROTIERENDEN ELEKTRISCHEN MASCHINE**

(71) Anmelder: Siemens Aktiengesellschaft, 80333 München (DE)
(72) Erfinder: Sabelfeld, Ilja, 10119 Berlin (DE)

(57) **Zusammenfassung**

Die Erfindung betrifft eine Zweischicht-Spulenwicklung (3) für einen Stator (9) einer rotierenden elektrischen Maschine (1) und ein Verfahren zur Herstellung der Spulenwicklung (3). Bei der Herstellung der Spulenwicklung (3) werden Unterlage-Formhalbspulen (25) jeweils als Wicklungsunterlage in eine Nut (31) eines Statorblechpakets (19) eingelegt. Danach werden Formspulen (29) jeweils mit dem Oberlage-Nutabschnitt (35) als Wicklungsoberlage in eine Nut (31), in die bereits ein Unterlage-Nutabschnitt (33) eingelegt wurde, und mit dem Unterlage-Nutabschnitt (33) als Wicklungsunterlage in eine Nut (31), in die noch kein Nutabschnitt (33, 35) eingelegt wurde, eingelegt. Anschließend werden Oberlage-Formhalbspulen (26) jeweils mit dem Oberlage-Nutabschnitt (35) als Wicklungsoberlage in eine Nut (31), in die bereits ein Unterlage-Nutabschnitt (33) eingelegt wurde, eingelegt. Jede Unterlage-Formhalbspule (25) wird mit einer Oberlage-Formhalbspule (26) zu einer zusammengesetzten Spule (27) verbunden.

## Beschreibung

Die Erfindung betrifft eine als Zweischichtwicklung ausgebildete Spulenwicklung für einen Stator einer rotierenden elektrischen Maschine und ein Verfahren zur Herstellung einer derartigen Spulenwicklung.

Statorwicklungen von Statoren rotierender elektrischer Maschinen werden häufig als so genannte Zweischichtwicklungen ausgeführt. Unter einer Zweischichtwicklung versteht man eine Statorwicklung, die zweilagig durch jede der Nuten eines Statorblechpakets geführt ist, wobei durch jede Nut nutgrundseitig eine so genannte Wicklungsunterlage und nutöffnungsseitig eine so genannte Wicklungsoberlage der Statorwicklung verläuft.

Eine Statorwicklung wird entweder als eine so genannte Spulenwicklung oder als eine so genannte Stabwicklung ausgeführt. Eine Zweischicht-Spulenwicklung wird in der Regel aus mehreren vorgefertigten Formspulen zusammengesetzt, die jeweils einen Unterlage-Nutabschnitt und einen Oberlage-Nutabschnitt aufweisen. Der Unterlage-Nutabschnitt verläuft in der Wicklungsunterlage durch eine Nut und der Oberlage-Nutabschnitt verläuft in der Wicklungsoberlage durch eine andere Nut. Jede Formspule weist mehrere in Reihe geschaltete Leiter auf, die in der Regel jeweils aus mehreren zueinander parallel geschalteten Teilleitern bestehen. Durch jede Nut verlaufen daher in der Wicklungsunterlage und der Wicklungsoberlage jeweils mindestens zwei Leiter, das heißt insgesamt mindestens vier Leiter. Eine Zweischicht-Spulenwicklung weist daher eine Leiterzahl von mindestens Vier auf, wobei die Leiterzahl die Anzahl der durch eine Nut verlaufenden Leiter angibt.

Eine Zweischicht-Stabwicklung weist dagegen in der Regel so genannte Roebelstäbe auf, die jeweils nur einen Leiter mit mehreren verdrillten, zueinander parallel geschalteten Teilleitern aufweisen und in der Wicklungsunterlage oder Wicklungsoberlage durch eine Nut verlaufen. Eine Zweischicht-Stabwicklung weist daher eine Leiterzahl von Zwei auf.

Bei der Herstellung einer Zweischicht-Spulenwicklung aus Formenspulen werden die Formspulen nacheinander in Nuten eingelegt. Da jede Formspule einen Unterlage-Nutabschnitt und einen Oberlage-Nutabschnitt aufweist, wird dabei in einige Nuten jeweils ein Oberlage-Nutabschnitt eingelegt, bevor ein Unterlage-Nutabschnitt eingelegt wurde. Beim weiteren Einlegen von Formspulen in die Nuten wird daher aus diesen Nuten jeweils der bereits eingelegte Oberlage-Nutabschnitt temporär wieder herausgezogen, um einen Unterlage-Nutabschnitt einzulegen, und nach dem Einlegen des Unterlage-Nutabschnitts wieder in die Nut eingezogen.

EP 3 118 973 A1 offenbart eine rotierende elektrische Maschine mit einem Stator, der eine Zweischicht-Statorwicklung aufweist. Die Spulen der Statorwicklung weisen von ihren Nutabschnitten radial nach außen abgewinkelte Wickelkopfabschnitte auf.

Der Erfindung liegt die Aufgabe zugrunde, eine Zweischicht-Spulenwicklung für einen Stator einer rotierenden elektrischen Maschine und ein Verfahren zur Herstellung einer derartigen Spulenwicklung anzugeben, die insbesondere hinsichtlich des Aufwands zum Einlegen von Formspulen der Spulenwicklung verbessert sind.

Die Aufgabe wird erfindungsgemäß durch ein Verfahren mit den Merkmalen des Anspruchs 1 und eine Spulenwicklung mit den Merkmalen des Anspruchs 12 gelöst.

Vorteilhafte Ausgestaltungen der Erfindung sind Gegenstand der Unteransprüche.

Mit dem erfindungsgemäßen Verfahren wird eine Spulenwicklung für einen Stator einer rotierenden elektrischen Maschine hergestellt, wobei der Stator ein Statorblechpaket mit Nuten aufweist und die Spulenwicklung als Zweischichtwicklung mit einer Wicklungsoberlage und einer Wicklungsunterlage ausgebildet ist. Bei dem Verfahren werden in einem ersten Fertigungsschritt Unterlage-Formhalbspulen mit jeweils einem Unterlage-Nutabschnitt und zwei Unterlage-Wickelkopfabschnitten, Oberlage-Formhalbspulen mit jeweils einem Oberlage-Nutabschnitt und zwei Oberlage-Wickelkopfabschnitten und Formspulen mit jeweils einem Unterlage-Nutabschnitt, einem Oberlage-Nutabschnitt und zwei Spulen-Wickelkopfabschnitten hergestellt. In einem zweiten Fertigungsschritt werden Unterlage-Formhalbspulen jeweils mit dem Unterlage-Nutabschnitt als Wicklungsunterlage in eine Nut eingelegt. In einem dritten Fertigungsschritt werden Formspulen jeweils mit dem Oberlage-Nutabschnitt als Wicklungsoberlage in eine Nut, in die bereits ein Unterlage-Nutabschnitt eingelegt wurde, und mit dem Unterlage-Nutabschnitt als Wicklungsunterlage in eine Nut, in die noch kein Nutabschnitt eingelegt wurde, eingelegt. In einem vierten Fertigungsschritt werden Oberlage-Formhalbspulen jeweils mit dem Oberlage-Nutabschnitt als Wicklungsoberlage in eine Nut, in die bereits ein Unterlage-Nutabschnitt eingelegt wurde, eingelegt. In einem fünften Fertigungsschritt wird jede Unterlage-Formhalbspule mit einer der Unterlage-Formhalbspule zugeordneten Oberlage-Formhalbspule zu einer zusammengesetzten Spule verbunden, indem ein erster Unterlage-Wickelkopfabschnitt der Unterlage-Formhalbspule mit einem ersten Oberlage-Wickelkopfabschnitt der Oberlage-Formhalbspule verbunden wird und der zweite Unterlage-Wickelkopfabschnitt der Unterlage-Formhalbspule mit dem zweiten Oberlage-Wickelkopfabschnitt der Oberlage-Formhalbspule verbunden wird.

Das erfindungsgemäße Verfahren sieht also die Herstellung einer Zweischicht-Spulenwicklung aus Formhalbspulen und Formspulen vor. Dabei werden Formhalbspulen und Formspulen derart in die Nuten des Statorblechpakets eingelegt, dass in jede Nut eine Formhalbspule oder eine Formspule als Wicklungsunterlage eingelegt wird, bevor eine Formhalbspule und Formspule als Wicklungsoberlage eingelegt wird. Dadurch entfällt gegenüber einer herkömmlichen Herstellung einer Spulenwicklung, bei der nur ganze Formspulen verwendet werden, das oben beschriebene temporäre Herausziehen von Oberlage-Nutabschnitten aus Nuten, in die eine Wicklungsoberlage eingelegt wird, bevor eine Wicklungsunterlage eingelegt wird. Erfindungsgemäß werden ferner Unterlage-Formhalbspulen nur in diejenigen Nuten eingelegt, aus denen Oberlage-Nutabschnitte bei der herkömmlichen Herstellung temporär wieder herausgezogen werden müssten, während für alle anderen Nuten als Wicklungsunterlage jeweils eine Formspule verwendet wird. Gegenüber einer Herstellung der Spulenwicklung ausschließlich aus Formhalbspulen wird das aufwändige Verbinden je zweier Formhalbspulen dadurch auf relativ wenige Formhalbspulen begrenzt. Das erfindungsgemäße Verfahren kombiniert damit optimal die Vorteile der Verwendung von Formhalbspulen und Formspulen zur Herstellung einer Spulenwicklung.

Eine Ausgestaltung der Erfindung sieht vor, dass alle Formspulen und alle zusammengesetzten Spulen einen übereinstimmenden Wickelschritt aufweisen. Dies ermöglicht eine regelmäßige und ausgewogene Zusammensetzung der Spulenwicklung aus Spulen. Unter einem Wickelschritt einer Spule wird dabei ein Nutenabstand der Nutabschnitte einer Spule verstanden, der die Anzahl von Nuten angibt, die zwischen den beiden Nutabschnitten liegen. Beispielsweise wird ein Wickelschritt einer Spule häufig in der Form 1:N angegeben, wenn N-2 Nuten zwischen den beiden Nutabschnitten der Spule liegen.

Eine weitere Ausgestaltung der Erfindung sieht vor, dass alle Formspulen und alle Formhalbspulen eine übereinstimmende Teilleiteranzahl von Teilleitern aufweisen und in dem fünften Fertigungsschritt jeweils ein Teilleiter einer Unterlage-Formhalbspule und ein Teilleiter der dieser Unterlage-Formhalbspule zugeordneten Oberlage-Formhalbspule miteinander verbunden werden. Die Teilleiter jeder Formspule und jeder zusammengesetzten Spule werden dabei beispielsweise zu mehreren Leitern verschaltet, wobei jeder Leiter von einer Untermenge zueinander parallel geschalteter Teilleiter gebildet wird und die Leiter zueinander in Reihe geschaltet werden. Vorzugsweise weisen alle Formspulen und alle zusammengesetzten Spulen eine übereinstimmende Leiteranzahl von mindestens drei Leitern auf.

Die vorgenannten Ausgestaltungen der Erfindung ermöglichen vorteilhaft einen gleichartigen Aufbau der Formspulen und der zusammengesetzten Spulen aus Teilleitern und Leitern, so dass die zusammengesetzten Spulen dieselben elektromagnetischen Eigenschaften wie die Formspulen aufweisen. Eine Leiteranzahl von mindestens drei Leitern pro Spule ist besonders vorteilhaft, da bei kleineren Leiteranzahlen in der Regel die Verwendung einer Stabwicklung günstiger als die Verwendung einer Spulenwicklung ist.

Eine weitere Ausgestaltung der Erfindung sieht vor, dass die Spulenwicklung eine Polpaarzahl kleiner als Fünf aufweist. Diese Ausgestaltung der Erfindung berücksichtigt, dass bei einer herkömmlichen Herstellung einer Spulenwicklung ausschließlich aus ganzen Formspulen die Anzahl der Nuten, aus denen Oberlage-Nutabschnitte temporär herausgezogen werden müssen, um Unterlage-Nutabschnitte einlegen zu können, mit steigender Polpaarzahl abnimmt. Für Maschinen mit niedriger Polzahl, insbesondere mit der Polzahl Zwei, kann in vielen Fällen gar keine Spulenwicklung aus ganzen Formspulen eingesetzt werden, weil der notwendige Platz für das temporäre Herausziehen von Oberlage-Nutabschnitten im Bohrungsdurchmesser des Statorblechpakets nicht gegeben ist. In diesen Fällen wird daher bisher eine Stabwicklung eingesetzt, die jedoch aufgrund des Verdrillens der Teilleiter in ihren Nutabschnitten und des Verbindens der Oberstäbe mit den Unterstäben fertigungstechnisch aufwändiger und teurer ist. Für eine Polpaarzahl größer als Vier lohnt sich in der Regel die erfindungsgemäße Herstellung einer Spulenwicklung aus Formhalbspulen und Formspulen nicht mehr gegenüber einer herkömmlichen Herstellung ausschließlich aus Formspulen, da der Aufwand für das Verbinden der Formhalbspulen bei der erfindungsgemäßen Herstellung größer wird als der Aufwand für das temporäre Herausziehen von Oberlage-Nutabschnitten bei dem herkömmlichen Verfahren.

Eine weitere Ausgestaltung der Erfindung sieht vor, dass die Spulenwicklung wickelkopfseitig mehrere Etagen aufweist, wobei für jede Etage in dem ersten Fertigungsschritt Formspulen und Formhalbspulen mit Nutabschnitten einer übereinstimmenden Nutabschnittslänge hergestellt werden und die Nutabschnittslängen verschiedener Etagen voneinander verschieden sind. Vorzugsweise werden dabei der zweite bis fünfte Fertigungsschritt für jede Etage durchgeführt, wobei diese Fertigungsschritte zunächst für die Etage mit der kleinsten Nutabschnittslänge und anschließend nacheinander für die weiteren Etagen in der Reihenfolge zunehmender Nutabschnittslängen durchgeführt werden. Ferner werden die Nuten jeder Nutenfolge aufeinander folgender Nuten, deren Anzahl mit der Anzahl der Etagen übereinstimmt, vorzugsweise jeweils voneinander verschiedenen Etagen zugeordnet, so dass durch jede Nut der Nutenfolge Spulen derselben Etage und durch je zwei verschiedene Nuten der Nutenfolge Spulen verschiedener Etagen verlaufen.

Die vorgenannten Ausgestaltungen der Erfindung sehen also vor, die Spulenwicklung in mehreren so genannten Etagen auszuführen, wobei die Spulen verschiedener Etagen voneinander verschiedene Nutabschnittslängen aufweisen. Dadurch haben die Spulen verschiedener Etagen voneinander verschiedene axiale Ausdehnungen, so dass ihre Wickelkopfabschnitte axial hintereinander angeordnet werden können. Dies vereinfacht oder ermöglicht überhaupt erst die Herstellung einer Spulenwicklung mit einer hohen Spulendichte, da eine hohe Spulendichte eine Ausführung der Spulenwicklung mit nur einer Etage aufgrund des Platzbedarfs für die Wickelkopfabschnitte erschwert oder sogar unmöglich machen kann. Die Fertigung der Etagen in der Reihenfolge steigender Nutabschnittslängen vereinfacht die Herstellung der Spulenwicklung vorteilhaft gegenüber einer Fertigung der Etagen in einer anderen Reihenfolge, da bei einer anderen Reihenfolge das Einlegen der Spulen innerer Etagen erschwert ist. Aus einer alternierenden Zuordnung der Nuten zu den Etagen ergibt sich eine rotationssymmetrische Anordnung, welche eine geringe Wickelkopfausladung und gute elektrische Eigenschaften aufweist.

Eine weitere Ausgestaltung der Erfindung sieht vor, dass jeder Wickelkopfabschnitt entlang einer Ebene verläuft, die senkrecht zu einer Längsachse eines mit dem Wickelkopfabschnitt verbundenen Nutabschnitts ist. Gemäß dieser Ausgestaltung der Erfindung sind die Wickelkopfabschnitte von den Nutabschnitten der Spulen jeweils im Wesentlichen radial nach außen abgewinkelt. Dadurch werden die axialen Ausdehnungen der Wickelköpfe und des Stators vorteilhaft gegenüber anderen Ausführungen der Wickelkopfabschnitte, beispielsweise gegenüber einer axialen Anordnung der Wickelkopfabschnitte an den Nutabschnitten, reduziert.

Bei einem erfindungsgemäßen Verfahren zur Herstellung eines Stators einer rotierenden elektrischen Maschine, der ein Blechpaket mit Nuten und eine Spulenwicklung aufweist, wird die Spulenwicklung gemäß dem oben beschriebenen Verfahren hergestellt. Die Vorteile einer derartigen Herstellung eines Stators ergeben sich aus den oben genannten Vorteilen der erfindungsgemäßen Herstellung einer Spulenwicklung.

Eine erfindungsgemäße Spulenwicklung für einen Stator einer rotierenden elektrischen Maschine ist mit dem erfindungsgemäßen Verfahren hergestellt.

Ein erfindungsgemäßer Stator einer rotierenden elektrischen Maschine weist ein Statorblechpaket mit Nuten und eine mit dem erfindungsgemäßen Verfahren hergestellte Spulenwicklung auf.

Eine erfindungsgemäße rotierende elektrische Maschine weist einen Stator auf, der ein Statorblechpaket mit Nuten und eine mit dem erfindungsgemäßen Verfahren hergestellte Spulenwicklung aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen Längsschnitt einer rotierenden elektrischen Maschine mit einer Spulenwicklung,
- FIG 2: eine perspektivische Darstellung eines Stators der elektrischen Maschine im Bereich eines Wickelkopfes der Spulenwicklung,
- FIG 3: eine Seitenansicht des Wickelkopfes der Spulenwicklung,
- FIG 4: eine perspektivische Darstellung einer Formspule der Spulenwicklung,
- FIG 5: eine perspektivische Darstellung einer Unterlage-Formhalbspule der Spulenwicklung,
- FIG 6: eine perspektivische Darstellung einer Oberlage-Formhalbspule der Spulenwicklung,
- FIG 7: eine Querschnittsdarstellung einer Formspule der Spulenwicklung,
- FIG 8: eine in eine Ebene abgewickelte Querschnittsdarstellung eines Statorblechpakets des Stators mit Unterlage-Formhalbspulen einer ersten Etage der Spulenwicklung,
- FIG 9: eine zu FIG 8 korrespondierende Frontansicht des Statorblechpakets,
- FIG 10: die in eine Ebene abgewickelte Querschnittsdarstellung des Statorblechpakets mit Unterlage-Formhalbspulen und Formspulen der ersten Etage der Spulenwicklung,
- FIG 11: eine zu FIG 10 korrespondierende Frontansicht des Statorblechpakets,
- FIG 12: die in eine Ebene abgewickelte Querschnittsdarstellung des Statorblechpakets mit der ersten Etage der Spulenwicklung,
- FIG 13: eine zu FIG 12 korrespondierende Frontansicht des Statorblechpakets,
- FIG 14: die in eine Ebene abgewickelte Querschnittsdarstellung des Statorblechpakets mit der ersten Etage und Unterlage-Formhalbspulen einer zweiten Etage der Spulenwicklung,
- FIG 15: eine zu FIG 14 korrespondierende Frontansicht des Statorblechpakets,
- FIG 16: die in eine Ebene abgewickelte Querschnittsdarstellung des Statorblechpakets mit der ersten Etage und Unterlage-Formhalbspulen und Formspulen der zweiten Etage der Spulenwicklung,
- FIG 17: eine zu FIG 16 korrespondierende Frontansicht des Statorblechpakets,
- FIG 18: die in eine Ebene abgewickelte Querschnittsdarstellung des Statorblechpakets mit der ersten Etage und der zweiten Etage der Spulenwicklung,
- FIG 19: eine zu FIG 18 korrespondierende Frontansicht des Statorblechpakets.

Einander entsprechende Teile sind in den Figuren mit denselben Bezugszeichen versehen.

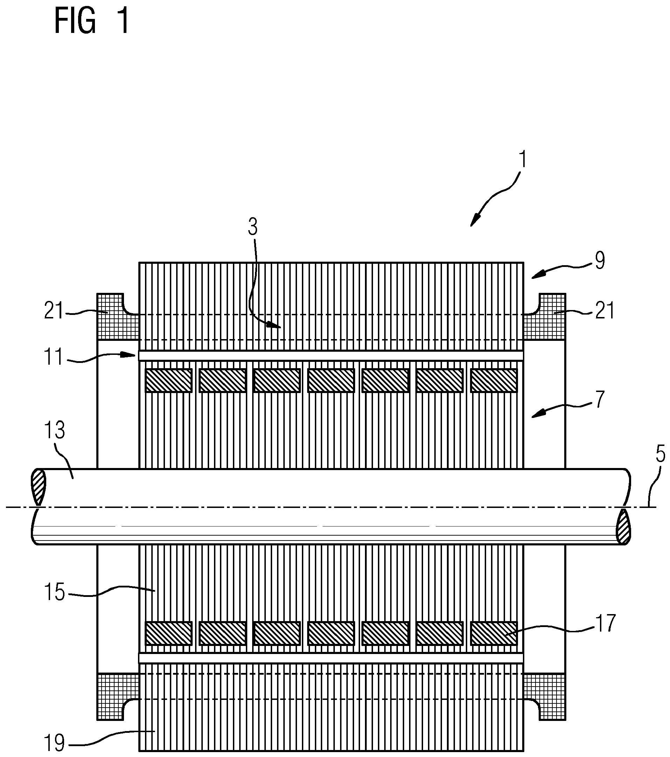

FIG 1 zeigt einen Längsschnitt eines Ausführungsbeispiels einer rotierenden elektrischen Maschine 1 mit einer Spulenwicklung 3. Die elektrische Maschine 1 weist einen um eine Rotationsachse 5 rotierbaren Rotor 7 und einen den Rotor 7 umgebenden Stator 9 auf, wobei sich zwischen dem Rotor 7 und dem Stator 9 ein Spalt 11, insbesondere ein Luftspalt, befindet. Die Rotationsachse 5 definiert eine Axialrichtung. Der Rotor 7 umfasst eine Welle 13 und ein Rotorblechpaket 15, in dem Permanentmagnete 17 angeordnet sind. Alternativ kann der Rotor 7 eine Rotorwicklung oder einen Kurzschlusskäfig aufweisen. Der Stator 9 umfasst ein Statorblechpaket 19 und die unten näher beschriebene Spulenwicklung 3, die an sich gegenüberliegenden axialen Enden des Statorblechpakets 19 jeweils einen Wickelkopf 21 aufweist.

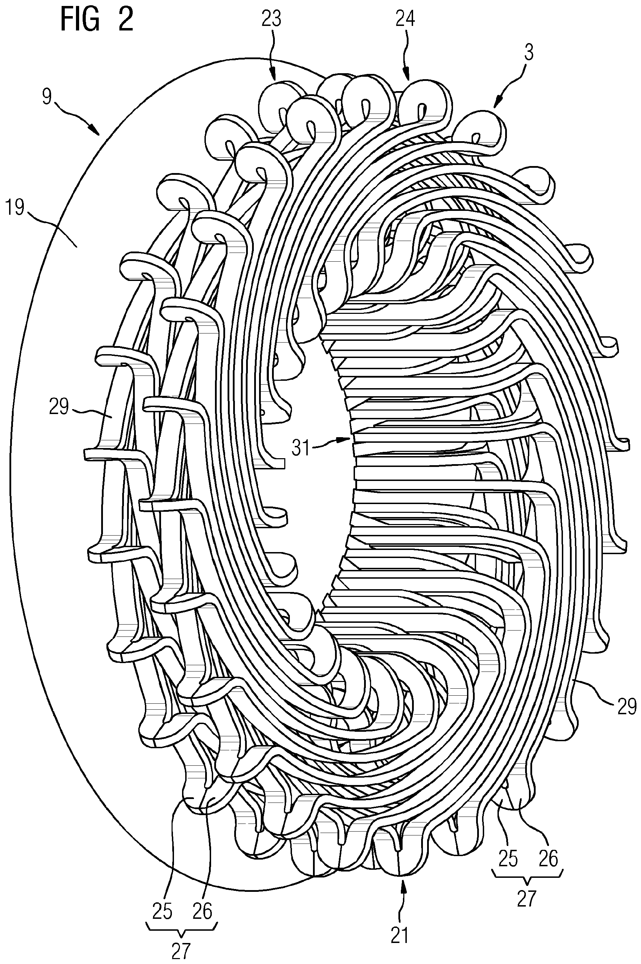

FIG 2 zeigt eine perspektivische Darstellung des Stators 9 mit der Spulenwicklung 3, wobei der Stator 9 und die Spulenwicklung 3 nur im Bereich eines Wickelkopfes 21 dargestellt sind.

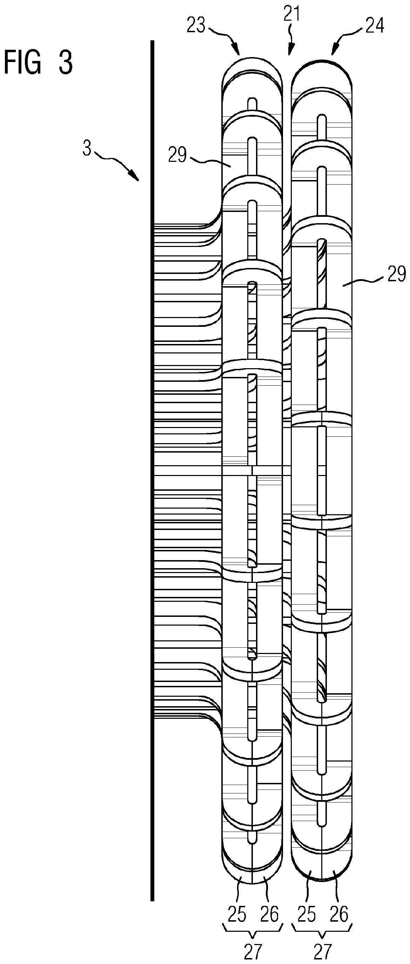

FIG 3 zeigt eine Seitenansicht der Spulenwicklung 3 im Bereich eines Wickelkopfes 21.

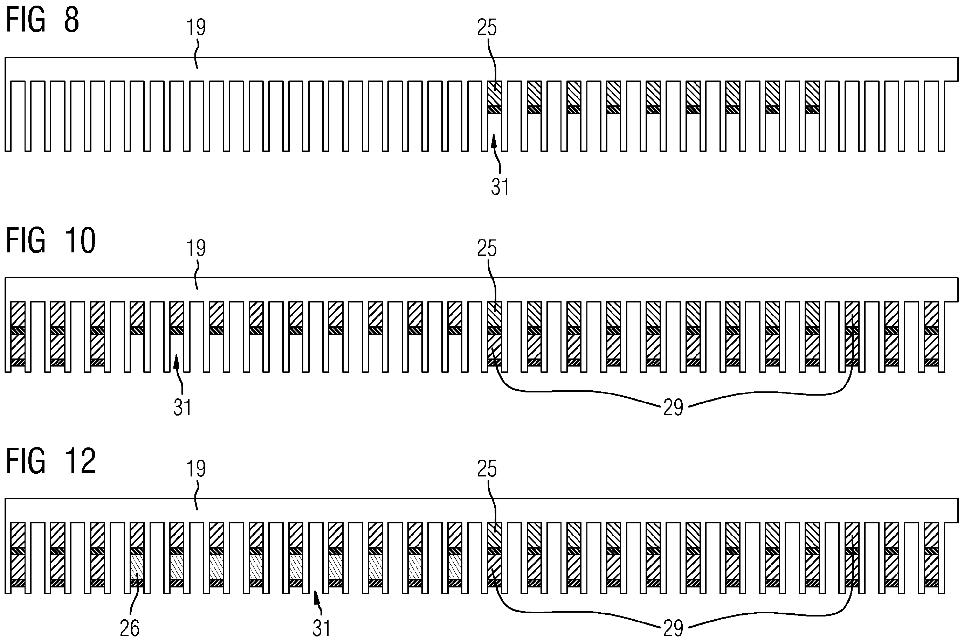

Die Spulenwicklung 3 ist als Zweischichtwicklung in zwei Etagen 23, 24 ausgeführt und aus Unterlage-Formhalbspulen 25, Oberlage-Formhalbspulen 26 und Formspulen 29 zusammengesetzt. Die Spulenwicklung 3 verläuft durch Nuten 31 des Statorblechpakets 19, wobei jede Unterlage-Formhalbspule 25 als Wicklungsunterlage durch eine Nut 31 verläuft, jede Oberlage-Formhalbspule 26 als Wicklungsoberlage durch eine Nut 31 verläuft und jede Formspule 29 als Wicklungsoberlage durch eine Nut 31 und als Wicklungsunterlage durch eine andere Nut 31 verläuft, siehe dazu auch die Figuren 8 bis 19. Jeweils eine Unterlage-Formhalbspule 25 und eine Oberlage-Formhalbspule 26 sind zu einer zusammengesetzten Spule 27 miteinander verbunden.

Alle zusammengesetzten Spulen 27 und Formspulen 29 ragen an beiden axialen Enden des Statorblechpakets 19 axial aus dem Statorblechpaket 19 heraus und bilden an den axialen Enden jeweils einen der Wickelköpfe 21. Dabei weisen die zusammengesetzten Spulen 27 und die Formspulen 29 einer ersten Etage 23 eine kleinere axiale Länge als die zusammengesetzten Spulen 27 und die Formspulen 29 der zweiten Etage 24 auf und ragen an beiden axialen Enden jeweils axial weniger weit aus dem Statorblechpaket 19 heraus als die zusammengesetzten Spulen 27 und die Formspulen 29 der zweiten Etage 24.

Das Statorblechpaket 19 dieses Ausführungsbeispiels weist 48 Nuten 31 auf, wobei 24 Nuten 31 von Spulen 27, 29 einer ersten Etage 23, die anderen 24 Nuten 31 von Spulen 27, 29 der zweiten Etage 24 und je zwei benachbarte Nuten 31 von Spulen 27, 29 voneinander verschiedener Etagen 23, 24 durchlaufen werden.

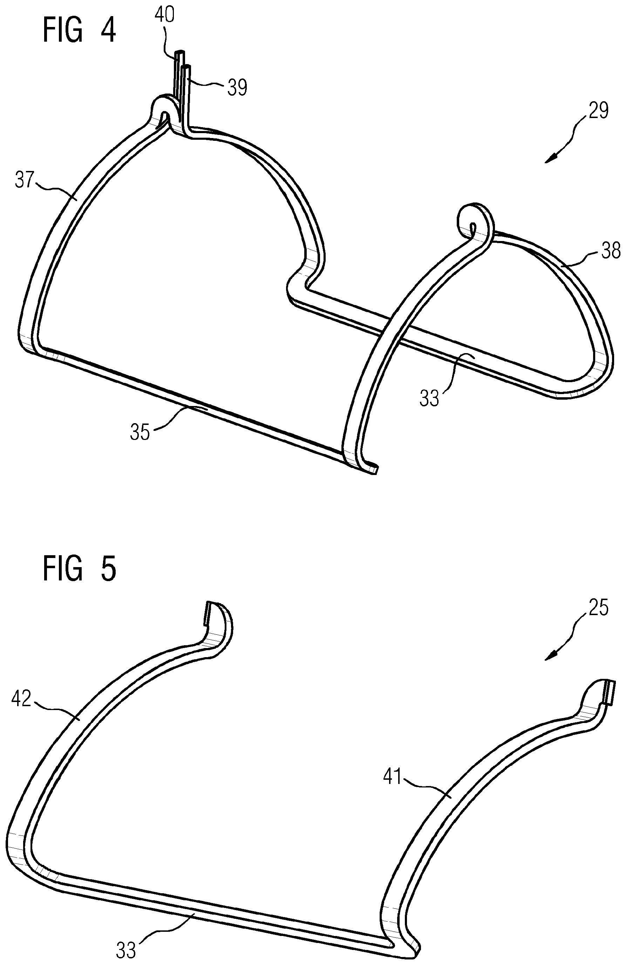

FIG 4 zeigt eine perspektivische Darstellung einer Formspule 29 der Spulenwicklung 3. Die Formspule 29 weist einen Unterlage-Nutabschnitt 33, einen Oberlage-Nutabschnitt 35 und zwei Spulen-Wickelkopfabschnitte 37, 38 auf. Die Nutabschnitte 33, 35 sind gleichartig ausgebildet und verlaufen gerade und parallel zueinander. Der Unterlage-Nutabschnitt 33 wird als Wicklungsunterlage in eine Nut 31 des Statorblechpakets 19 eingelegt, der Oberlage-Nutabschnitt 35 wird als Wicklungsoberlage in eine andere Nut 31 des Statorblechpakets 19 eingelegt, siehe dazu die Figuren 10, 11, 16 und 17. Jeder Spulen-Wickelkopfabschnitt 37, 38 verbindet ein Ende des Unterlage-Nutabschnitts 33 und ein Ende des Oberlage-Nutabschnitts 35 miteinander, wobei die beiden Spulen-Wickelkopfabschnitte 37, 38 an sich gegenüberliegenden Enden der Nutabschnitte 33, 35 angeordnet sind. Jeder Spulen-Wickelkopfabschnitt 37, 38 verläuft gebogen entlang einer zu den Längsachsen der Nutabschnitte 33, 35 senkrechten Ebene, so dass er nach dem Einlegen der Nutabschnitte 33, 35 in Nuten 31 von den Nutabschnitten 33, 35 nach außen verläuft. Dargestellt sind ferner zwei Stromanschlüsse 39, 40, die an einem Spulen-Wickelkopfabschnitt 37 angeordnet sind und über die die Formspule 29 mit elektrischem Strom versorgt werden kann.

FIG 5 zeigt eine perspektivische Darstellung einer Unterlage-Formhalbspule 25 der Spulenwicklung 3. Die Unterlage-Formhalbspule 25 ist als eine Hälfte einer Formspule 29 ausgebildet, die den Unterlage-Nutabschnitt 33 und zwei Unterlage-Wickelkopfabschnitte 41, 42, die jeweils eine Hälfte eines Spulen-Wickelkopfabschnitts 37, 38 bilden, aufweist. Dementsprechend umfasst die Unterlage-Formhalbspule 25 einen geraden Unterlage-Nutabschnitt 33 und zwei Unterlage-Wickelkopfabschnitte 41, 42, die an sich gegenüberliegenden Enden des Unterlage-Nutabschnitts 33 angeordnet sind und jeweils gebogen entlang einer zu einer Längsachse des Unterlage-Nutabschnitts 33 senkrechten Ebene verlaufen. Der Unterlage-Nutabschnitt 33 wird als Wicklungsunterlage in eine Nut 31 des Statorblechpakets 19 eingelegt, siehe dazu die Figuren 8, 9, 14 und 15. Die Unterlage-Formhalbspule 25 kann ferner einen (in FIG 5 nicht dargestellten) Stromanschluss 39 (siehe FIG 4) aufweisen.

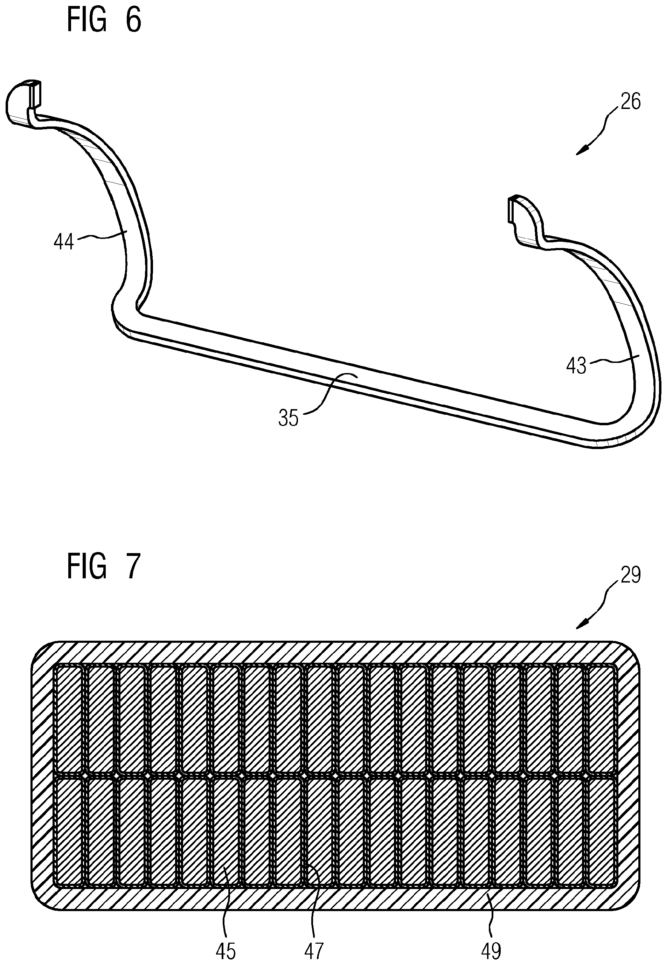

FIG 6 zeigt eine perspektivische Darstellung einer Oberlage-Formhalbspule 26 der Spulenwicklung 3. Die Oberlage-Formhalbspule 26 ist als die zu einer Unterlage-Formhalbspule 25 komplementäre Hälfte einer Formspule 29 ausgebildet. Dementsprechend umfasst die Oberlage-Formhalbspule 26 einen geraden Oberlage-Nutabschnitt 35 und zwei Oberlage-Wickelkopfabschnitte 43, 44, die an sich gegenüberliegenden Enden des Oberlage-Nutabschnitts 35 angeordnet sind und jeweils gebogen entlang einer zu einer Längsachse des Oberlage-Nutabschnitts 35 senkrechten Ebene verlaufen. Der Oberlage-Nutabschnitt 35 wird als Wicklungsoberlage in eine Nut 31 des Statorblechpakets 19 eingelegt, siehe dazu die Figuren 12, 13, 18 und 19. Die Oberlage-Formhalbspule 26 kann ferner einen (in FIG 6 nicht dargestellten) Stromanschluss 40 (siehe FIG 4) aufweisen.

FIG 7 zeigt eine Querschnittsdarstellung einer Formspule 29 der Spulenwicklung 3. Die Formspule 29 weist mehrere Teilleiter 45 auf, die voneinander durch Teilleiterisolierungen 47 elektrisch isoliert sind. Ferner weist die Formspule 29 eine alle Teilleiter 45 und Teilleiterisolierungen 47 umschließende Hauptisolierung 49 auf. Jeder Teilleiter 45 ist beispielsweise als ein Flachdraht aus Kupfer ausgeführt. Die Teilleiter 45 werden zu mehreren Leitern verschaltet, wobei jeder Leiter von einer Untermenge zueinander parallel geschalteter Teilleiter 45 gebildet wird und die Leiter zueinander in Reihe geschaltet werden. Alle Leiter weisen eine übereinstimmende Anzahl von Teilleitern 45 auf. Die Formhalbspulen 25, 26 weisen analog zu einer Formspule 29 Teilleiter 45, Teilleiterisolierungen 47 und eine Hauptisolierung 49 auf, wobei die Teilleiteranzahlen von Teilleitern 45 der Formhalbspulen 25, 26 jeweils mit der Teilleiteranzahl einer Formspule 29 übereinstimmen und die Teilleiter 45 einer zusammengesetzten Spule 27 wie die Teilleiter 45 einer Formspule 29 zu Leitern verschaltet werden.

Im Folgenden wird das erfindungsgemäße Verfahren beispielhaft für die Herstellung der anhand der Figuren 1 bis 7 beschriebenen Spulenwicklung 3 beschrieben. In einem ersten Fertigungsschritt werden die Formhalbspulen 25, 26 und Formspulen 29 hergestellt. Dabei werden für jede Etage 23, 24 Formspulen 29 und Formhalbspulen 25, 26 mit Nutabschnitten 33, 35 einer übereinstimmenden Nutabschnittslänge hergestellt, wobei die Nutabschnittslängen der beiden Etagen 23, 24 voneinander verschieden sind. Die Nutabschnittslänge der Formspulen 29 und Formhalbspulen 25, 26 der zweiten Etage 24 übertrifft die Nutabschnittslänge der Formspulen 29 und Formhalbspulen 25, 26 der ersten Etage 23 um mehr als das Doppelte der axialen Ausdehnung eines Spulen-Wickelkopfabschnitts 37, 38 einer Formspule 29. Alle Formspulen 29 und alle zusammengesetzten Spulen 27 weisen einen übereinstimmenden Wickelschritt auf, der in dem dargestellten Ausführungsbeispiel 1:19 beträgt; mit anderen Worten sind die beiden Nutabschnitte 33, 35 jeder Formspule 29 und jeder zusammengesetzten Spule 27 derart voneinander beabstandet, dass nach dem Einlegen der beiden Nutabschnitte 33, 35 in jeweils eine Nut 31 zwischen diesen beiden Nuten 31 siebzehn andere Nuten 31 liegen.

Die Figuren 8 bis 19 illustrieren weitere Fertigungsschritte, in denen die Formspulen 29 und Formhalbspulen 25, 26 in Nuten 31 des Statorblechpakets 19 eingelegt werden. Dabei werden zunächst die Formspulen 29 und Formhalbspulen 25, 26 der ersten Etage 23 eingelegt und anschließend die Formspulen 29 und Formhalbspulen 25, 26 der zweiten Etage 24. Die Nuten 31 werden abwechselnd den Etagen 23, 24 zugeordnet, so dass in je zwei einander benachbarte Nuten 31 Formhalbspulen 25, 26 und/oder Formspulen 29 verschiedener Etagen 23, 24 eingelegt werden.

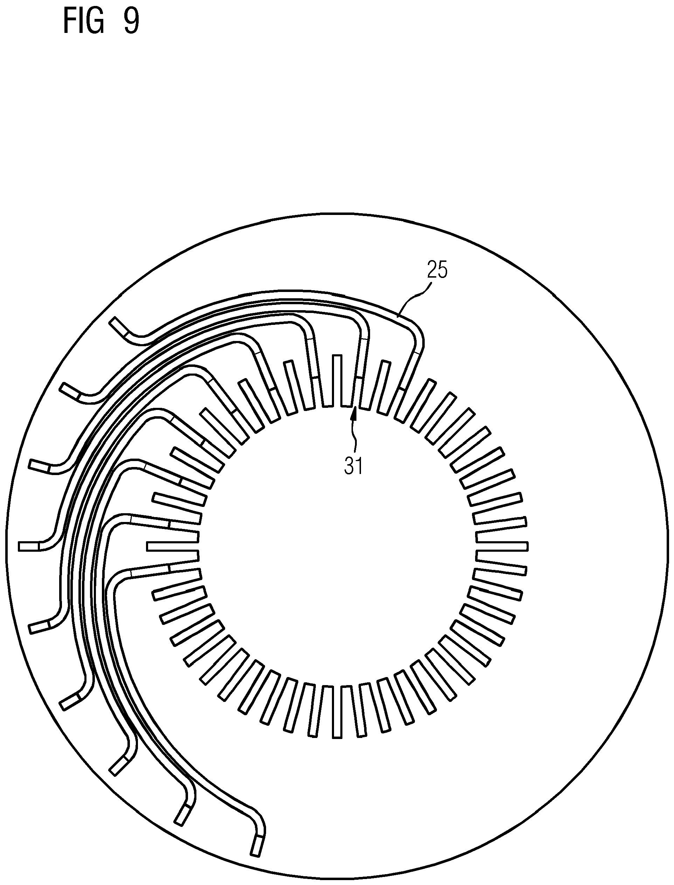

Die Figuren 8 und 9 zeigen die Spulenwicklung 3 und das Statorblechpaket 19 nach einem zweiten Fertigungsschritt. In dem zweiten Fertigungsschritt wird in neun aufeinander folgende Nuten 31, die der ersten Etage 23 zugeordnet sind, jeweils eine Unterlage-Formhalbspule 25 der ersten Etage 23 mit dem Unterlage-Nutabschnitt 33 als Wicklungsunterlage eingelegt. FIG 8 zeigt eine in eine Ebene abgewickelte Querschnittsdarstellung des Statorblechpakets 19 mit den eingelegten Unterlage-Formhalbspulen 25 der ersten Etage 23, und FIG 9 zeigt eine Frontansicht des Statorblechpakets 19 mit den eingelegten Unterlage-Formhalbspulen 25 der ersten Etage 23.

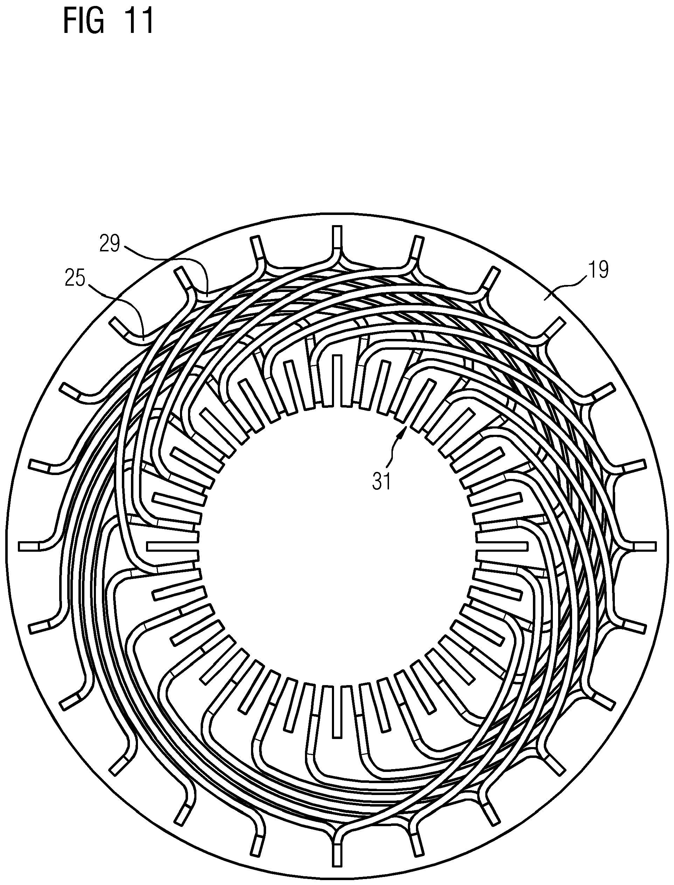

Die Figuren 10 und 11 zeigen analog zu den Figuren 8 und 9 die Spulenwicklung 3 und das Statorblechpaket 19 nach einem dritten Fertigungsschritt. In dem dritten Fertigungsschritt werden zunächst neun Formspulen 29 der ersten Etage 23 jeweils mit dem Oberlage-Nutabschnitt 35 als Wicklungsoberlage in eine Nut 31, in die in dem zweiten Fertigungsschritt eine Unterlage-Formhalbspule 25 der ersten Etage 23 eingelegt wurde, und mit dem Unterlage-Nutabschnitt 33 als Wicklungsunterlage in eine Nut 31, in die keine Unterlage-Formhalbspule 25 der ersten Etage 23 eingelegt wurde, eingelegt. Anschließend werden sechs weitere Formspulen 29 der ersten Etage 23 jeweils mit dem Oberlage-Nutabschnitt 35 als Wicklungsoberlage in eine Nut 31, in die vorher ein Unterlage-Nutabschnitt 33 einer Formspule 29 der ersten Etage 23 eingelegt wurde, und mit dem Unterlage-Nutabschnitt 33 als Wicklungsunterlage in eine Nut 31, in die noch keine Formspule 29 der ersten Etage 23 eingelegt wurde, eingelegt.

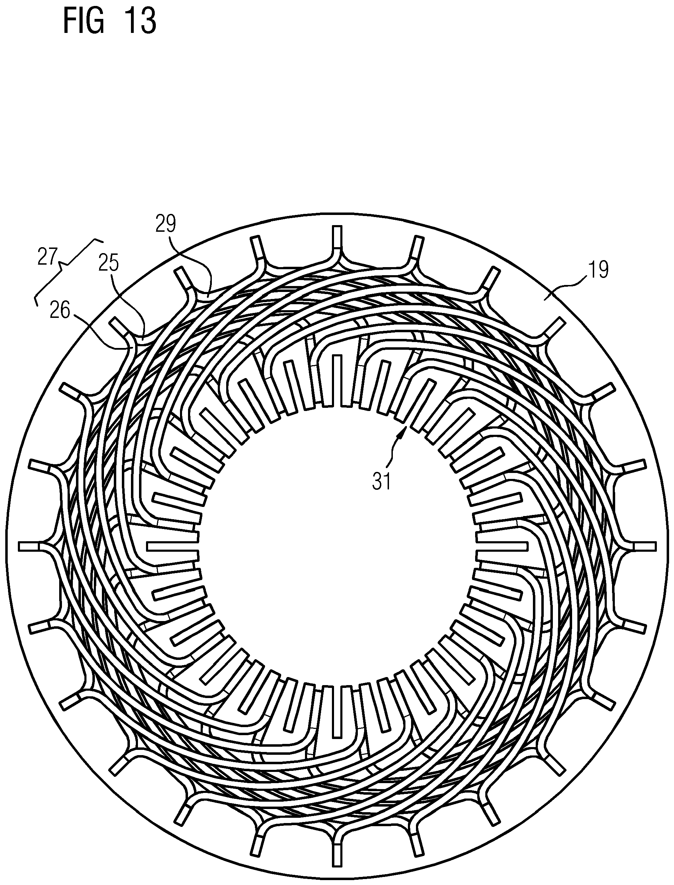

Die Figuren 12 und 13 zeigen analog zu den Figuren 8 bis 11 die Spulenwicklung 3 und das Statorblechpaket 19 nach einem vierten Fertigungsschritt. In dem vierten Fertigungsschritt wird in jede der ersten Etage 23 zugeordnete Nut 31, durch die noch keine Wicklungsoberlage verläuft, eine Oberlage-Formhalbspule 26 mit dem Oberlage-Nutabschnitt 35 als Wicklungsoberlage eingelegt.

In einem fünften Fertigungsschritt wird jede Unterlage-Formhalbspule 25 der ersten Etage 23 und mit einer der Unterlage-Formhalbspule 25 zugeordneten Oberlage-Formhalbspule 26 der ersten Etage 23 zu einer zusammengesetzten Spule 27 verbunden, indem ein erster Unterlage-Wickelkopfabschnitt 41 der Unterlage-Formhalbspule 25 mit einem ersten Oberlage-Wickelkopfabschnitt 43 der Oberlage-Formhalbspule 26 verbunden wird und der zweite Unterlage-Wickelkopfabschnitt 42 der Unterlage-Formhalbspule 25 mit dem zweiten Oberlage-Wickelkopfabschnitt 44 der Oberlage-Formhalbspule 26 verbunden wird. Dabei wird jeder Teilleiter 45 der Unterlage-Formhalbspule 25 mit einem Teilleiter 45 der Oberlage-Formhalbspule 26 verbunden. Ferner werden die miteinander verbundenen Teilleiter 45 jeweils gegenüber den anderen Teilleitern 45 isoliert und die Verbindungsstellen werden jeweils zusätzlich nach außen isoliert.

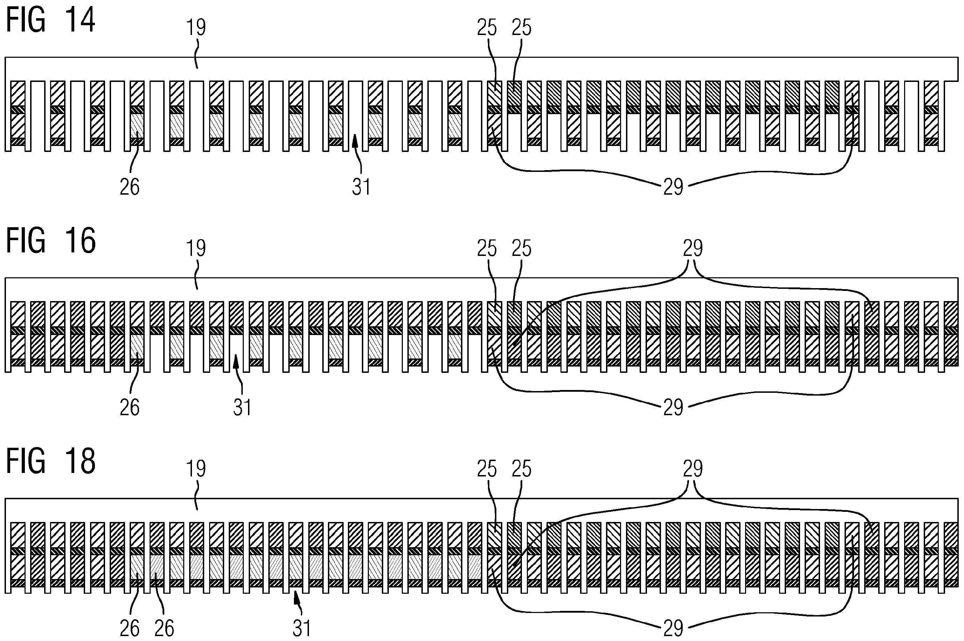

Anschließend werden die anhand der Figuren 8 bis 13 für die erste Etage 23 beschriebenen Fertigungsschritte analog für die zweite Etage 24 durchgeführt. Dies wird analog zu den Figuren 8 bis 13 anhand der Figuren 14 bis 19 illustriert.

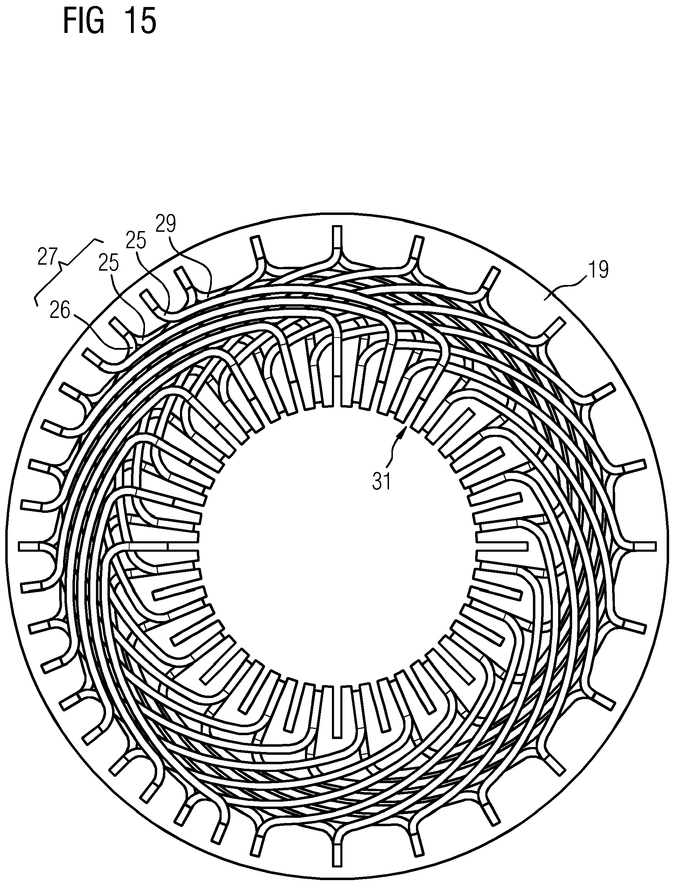

Die Figuren 14 und 15 zeigen die Spulenwicklung 3 und das Statorblechpaket 19 nach dem Einlegen von neun Unterlage-Formhalbspulen 25 der zweiten Etage 24 als Wicklungsunterlage in jeweils eine von neun aufeinander folgende Nuten 31, die der zweiten Etage 24 zugeordnet sind und jeweils auf eine der ersten Etage 23 zugeordnete Nut 31 folgen, in die eine Unterlage-Formhalbspule 25 der ersten Etage 23 eingelegt wurde.

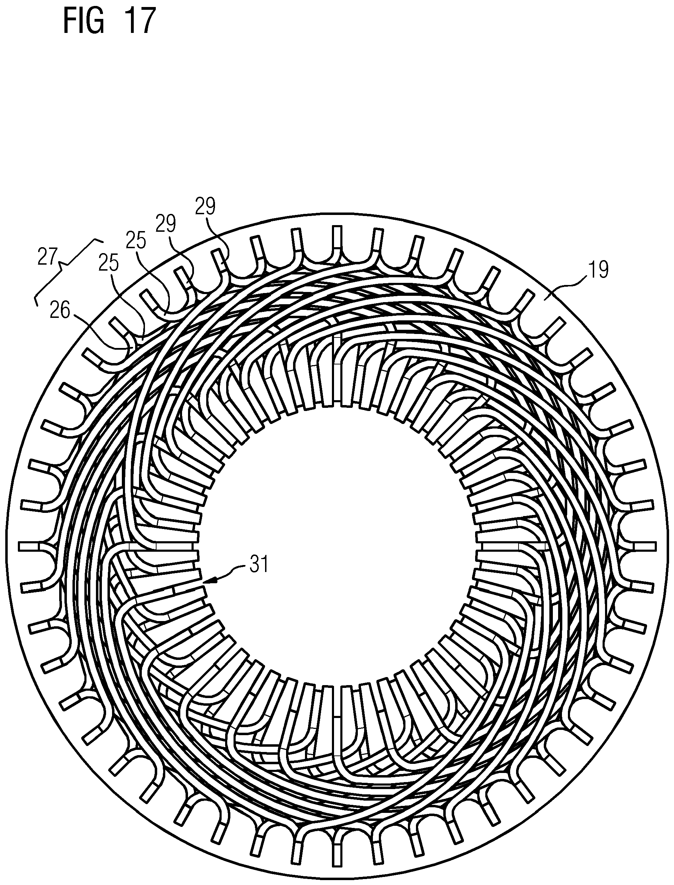

Die Figuren 16 und 17 zeigen die Spulenwicklung 3 und das Statorblechpaket 19 nach dem Einlegen von insgesamt fünfzehn Formspulen 29 der zweiten Etage 24, wobei diese Formspulen 29 analog zum anhand der Figuren 10 und 11 beschriebenen Einlegen der Formspulen 29 der ersten Etage 23 eingelegt werden.

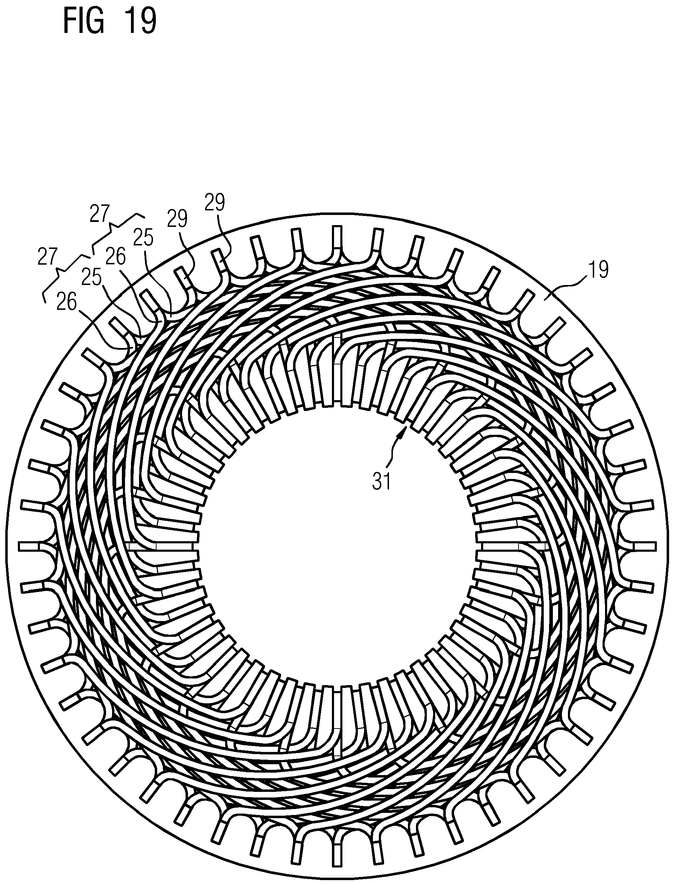

Die Figuren 18 und 19 zeigen die Spulenwicklung 3 und das Statorblechpaket 19 nach dem Einlegen der Oberlage-Formhalbspulen 26 der zweiten Etage 24 in die verbleibenden Nuten 31, durch die noch keine Wicklungsoberlagen verlaufen. Abschließend wird analog zu dem oben für die erste Etage 23 beschriebenen fünften Fertigungsschritt jede Unterlage-Formhalbspule 25 der zweiten Etage 24 und mit einer der Unterlage-Formhalbspule 25 zugeordneten Oberlage-Formhalbspule 26 der zweiten Etage 24 zu einer zusammengesetzten Spule 27 verbunden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung einer Spulenwicklung (3) für einen Stator (9) einer rotierenden elektrischen Maschine (1), wobei der Stator (9) ein Statorblechpaket (19) mit Nuten (31) aufweist und die Spulenwicklung (3) als Zweischichtwicklung mit einer Wicklungsoberlage und einer Wicklungsunterlage je Nut (31) ausgebildet ist, wobei
- in einem ersten Fertigungsschritt Unterlage-Formhalbspulen (25) mit jeweils einem Unterlage-Nutabschnitt (33) und zwei Unterlage-Wickelkopfabschnitten (41, 42), Oberlage-Formhalbspulen (26) mit jeweils einem Oberlage-Nutabschnitt (35) und zwei Oberlage-Wickelkopfabschnitten (43, 44) und Formspulen (29) mit jeweils einem Unterlage-Nutabschnitt (33), einem Oberlage-Nutabschnitt (35) und zwei Spulen-Wickelkopfabschnitten (37, 38) hergestellt werden,
- in einem zweiten Fertigungsschritt Unterlage-Formhalbspulen (25) jeweils mit dem Unterlage-Nutabschnitt (33) als Wicklungsunterlage in eine Nut (31) eingelegt werden,
- in einem dritten Fertigungsschritt Formspulen (29) jeweils mit dem Oberlage-Nutabschnitt (35) als Wicklungsoberlage in eine Nut (31), in die bereits ein Unterlage-Nutabschnitt (33) eingelegt wurde, und mit dem Unterlage-Nutabschnitt (33) als Wicklungsunterlage in eine Nut (31), in die noch kein Nutabschnitt (33, 35) eingelegt wurde, eingelegt werden,
- in einem vierten Fertigungsschritt Oberlage-Formhalbspulen (26) jeweils mit dem Oberlage-Nutabschnitt (35) als Wicklungsoberlage in eine Nut (31), in die bereits ein Unterlage-Nutabschnitt (33) eingelegt wurde, eingelegt werden, und
- in einem fünften Fertigungsschritt jede Unterlage-Formhalbspule (25) mit einer der Unterlage-Formhalbspule (25) zugeordneten Oberlage-Formhalbspule (26) zu einer zusammengesetzten Spule (27) verbunden wird, indem ein erster Unterlage-Wickelkopfabschnitt (41) der Unterlage-Formhalbspule (25) mit einem ersten Oberlage-Wickelkopfabschnitt (43) der Oberlage-Formhalbspule (26) verbunden wird und der zweite Unterlage-Wickelkopfabschnitt (42) der Unterlage-Formhalbspule (25) mit dem zweiten Oberlage-Wickelkopfabschnitt (44) der Oberlage-Formhalbspule (26) verbunden wird.

2. Verfahren nach Anspruch 1,
**dadurch gekennzeichnet, dass** alle Formspulen (29) und alle zusammengesetzten Spulen (27) einen übereinstimmenden Wickelschritt aufweisen.

3. Verfahren nach Anspruch 1 oder 2,
**dadurch gekennzeichnet, dass** alle Formspulen (29) und alle Formhalbspulen (25, 26) eine übereinstimmende Teilleiteranzahl von Teilleitern (45) aufweisen und in dem fünften Fertigungsschritt jeweils ein Teilleiter (45) einer Unterlage-Formhalbspule (25) und ein Teilleiter (45) der dieser Unterlage-Formhalbspule (25) zugeordneten Oberlage-Formhalbspule (26) miteinander verbunden werden.

4. Verfahren nach Anspruch 3,
**dadurch gekennzeichnet, dass** die Teilleiter (45) jeder Formspule (29) und jeder zusammengesetzten Spule (27) zu mehreren Leitern verschaltet werden, wobei jeder Leiter von einer Untermenge zueinander parallel geschalteter Teilleiter (45) gebildet wird und die Leiter zueinander in Reihe geschaltet werden.

5. Verfahren nach Anspruch 4,
**dadurch gekennzeichnet, dass** alle Formspulen (29) und alle zusammengesetzten Spulen (27) eine übereinstimmende Leiteranzahl von mindestens drei Leitern aufweisen.

6. Verfahren nach einem der vorhergehenden Ansprüche,
**dadurch gekennzeichnet, dass** die Spulenwicklung (3) eine Polpaarzahl kleiner als Fünf aufweist.

7. Verfahren nach einem der vorhergehenden Ansprüche,
**dadurch gekennzeichnet, dass** die Spulenwicklung (3) mehrere Etagen (23, 24) aufweist, wobei für jede Etage (23, 24) in dem ersten Fertigungsschritt Formspulen (29) und Formhalbspulen (25, 26) mit Nutabschnitten (33, 35) einer übereinstimmenden Nutabschnittslänge hergestellt werden und die Nutabschnittslängen verschiedener Etagen (23, 24) voneinander verschieden sind.

8. Verfahren nach Anspruch 7,
**dadurch gekennzeichnet, dass** der zweite bis fünfte Fertigungsschritt für jede Etage (23, 24) durchgeführt werden, wobei diese Fertigungsschritte zunächst für die Etage (23) mit der kleinsten Nutabschnittslänge und anschließend nacheinander für die weiteren Etagen (24) in der Reihenfolge zunehmender Nutabschnittslängen durchgeführt werden.

9. Verfahren nach Anspruch 7 oder 8,
**dadurch gekennzeichnet, dass** die Nuten (31) jeder Nutenfolge aufeinander folgender Nuten (31), deren Anzahl mit der Anzahl der Etagen (23, 24) übereinstimmt, jeweils voneinander verschiedenen Etagen (23, 24) zugeordnet werden, so dass durch jede Nut (31) der Nutenfolge Spulen (27, 29) derselben Etage (23, 24) und durch je zwei verschiedene Nuten (31) der Nutenfolge Spulen (27, 29) verschiedener Etagen (23, 24) verlaufen.

10. Verfahren nach einem der vorhergehenden Ansprüche,
**dadurch gekennzeichnet, dass** jeder Wickelkopfabschnitt (37, 38, 41 bis 44) entlang einer Ebene verläuft, die senkrecht zu einer Längsachse eines mit dem Wickelkopfabschnitt (37, 38, 41 bis 44) verbundenen Nutabschnitts (33, 35) ist.

11. Verfahren zur Herstellung eines Stators (9) einer rotierenden elektrischen Maschine (1), der ein Statorblechpaket (19) mit Nuten (31) und eine Spulenwicklung (3) aufweist, wobei die Spulenwicklung (3) gemäß einem der vorhergehenden Ansprüche hergestellt wird.

12. Spulenwicklung (3) für einen Stator (9) einer rotierenden elektrischen Maschine (1), wobei der Stator (9) ein Statorblechpaket (19) mit Nuten (31) aufweist und die Spulenwicklung (3) gemäß einem der Ansprüche 1 bis 10 hergestellt ist.

13. Stator (9) einer rotierenden elektrischen Maschine (1), der ein Statorblechpaket (19) mit Nuten (31) und eine gemäß einem der Ansprüche 1 bis 10 hergestellte Spulenwicklung (3) aufweist.

14. Rotierende elektrische Maschine (1) mit einem Stator (9), der ein Statorblechpaket (19) mit Nuten (31) und eine gemäß einem der Ansprüche 1 bis 10 hergestellte Spulenwicklung (3) aufweist.
